# EUROPEAN PATENT SPECIFICATION

(11) **EP 2 167 437 B1**
(45) Date of publication and mention of the grant of the patent: **08.08.2018**
(21) Application number: 08775483.4
(22) Date of filing: 13.06.2008
(51) Int. Cl.: C03B 23/033, C03B 23/025, C03B 35/16, C03B 35/18, C03B 27/044, C03B 25/08, C03B 27/04

(54) **METHOD AND APPARATUS FOR BENDING AND TEMPERING A GLASS PANEL**
VERFAHREN UND VORRICHTUNG ZUM BEUGEN UND VORSPANNEN EINER GLASPLATTE
PROCÉDÉ ET APPAREIL PERMETTANT D'INCURVER ET DE TREMPER UN PANNEAU DE VERRE

(30) Priority: 18.06.2007 FI 20075462
(43) Date of publication of application: 31.03.2010
(73) Proprietor: Glaston Finland Oy, 33730 Tampere (FI)
(72) Inventor: HARJUNEN, Pete, FI-37120 Nokia (FI); VALTONEN, Veijo, FI-33820 Tampere (FI); OLAN, Mika, FI-33950 Pirkkala (FI); TANHUANPÄÄ, Mikko, FI-36420 Sahalahti (FI)
(74) Representative: LEITZINGER OY
(86) International application number: PCT/FI2008/050358
(87) International publication number: WO 2008/155457

(56) References cited:
- EP-A1- 1 020 412
- EP-A1- 1 559 690
- WO-A1-01/30711
- FI-B- 101 697
- FI-B- 115 768
- FI-C- 92 183
- JP-A- 2000 072 461
- US-A1- 2006 288 737
- US-B1- 6 698 243

## Description

The invention relates to a method for bending and tempering a glass panel, said method comprising the steps of
- heating a glass panel in a heating furnace for bending and tempering
- feeding a flat glass panel from the furnace onto a bending conveyor with the bending conveyor in a straight configuration
- arching the bending conveyor and the glass panel to a desired curvature with the glass panel moving along the bending conveyor
- passing a bent glass panel from the bending conveyor onto a tempering conveyor present as its extension, which has been previously arched to a desired curve as early as or even prior to a flat glass panel is received onto the straight bending conveyor.

The invention relates also to an apparatus for bending and tempering a glass panel, said apparatus comprising
- a heating furnace for heating glass panels to a bending temperature
- a bending conveyor for bending glass panels, the bending conveyor comprising horizontal conveyor rolls
- means for arching the bending conveyor to a curve matching the desired curvature of a glass panel and means for cooling the bent glass panel for tempering
- a tempering conveyor and means for arching the tempering conveyor.

Such a method and apparatus are known for example from the patent publication EP-1020412 (A1). In this prior known apparatus, the bending conveyor is formed into a curved plane by vertically moving the conveyor rollers, and the curved plane is shifted in the transferring direction of the glass plate. This requires long and expensive bending conveyor and creates discontinuity of the arch shaped transferring path between the bending conveyor and tempering conveyor. Such discontinuity affects the quality.

US 6,698,243 B1 shows method and apparatus for bending and tempering a glass sheet. The bending conveyor has a predetermined arch without possibility of arching during the bending process. The same concerns also the tempering conveyor. This method and apparatus can not be used for bending glass sheets with varying bending radius. Bending with small bending radius is not possible, because the upstream end of the bending conveyor is always in the position for receiving glass sheets from the furnace conveyor.

The patent publication FI-101697 discloses a method and apparatus, wherein a bending conveyor and a cooling conveyor are also as extensions of each other. In this prior known apparatus, the bending conveyor is in a condition previously arched to a curve as it receives the glass. This is adverse for the reason that the glass is forced to bend at a single point of bending. Regarding the quality of a final product, it is beneficial that the glass should bend simultaneously over its entire bending distance.

EP 1 559 690 A1 teaches a bending and tempering furnace wherein the centers of bending rollers are disposed along a circular arc. The bending conveyor is not arched during bending, but the bending conveyor is composed of pre-curved rollers having their curvature in transversal direction relative to the conveying direction. The middle points of the curved rollers descent towards the tempering conveyor. In other words, the degree of curvature of the rollers increases towards the tempering conveyor. This construction does not enable the feature of arching the bending conveyor which was straight before arching.

It is an object of the invention to eliminate the limitations and problems associated with the above prior known solutions and to provide a method and apparatus capable of producing high-quality tempered bent glass with a high capacity and with varying curvatures of the glass panels.

This object is achieved by a method presented in the appended claim 1. The object is also achieved by an apparatus presented in the appended claim 6. Preferred embodiments of the invention are presented in the dependent claims.

One exemplary embodiment of the invention will now be described more closely with reference to the accompanying drawings, in which
- Figs. 1-3: show schematically an apparatus of the invention in a side view during various working sequences.
- Fig. 4: shows more closely a bending conveyor and a tempering conveyor in a configuration arched to a desired radius of curvature, visualizing the arching of a bending conveyor 4, or at least its upstream end section, beyond a desired final curvature of the glass panel.
- Fig. 5: shows more closely a bending conveyor and a tempering conveyor in such a configuration that a tempering conveyor 5 has been arched to a radius of curvature R3 which is smaller compared to a radius of curvature R1 of the bending conveyor 4.
- Fig. 6: visualizes variations in the traveling speed of a glass panel as it emerges from the furnace onto a bending conveyor and passes from the bending conveyor onto a tempering conveyor, and
- Fig. 7: shows an even closer view of actuators used for arching the tempering conveyor.

The apparatus according to the invention includes a heating furnace 1 for heating glass panels G therein to a bending temperature. From a furnace conveyor 2 the glass panel is passed by way of an intermediate conveyor 3 onto a bending conveyor 4, including horizontal conveyor rolls with press rolls thereabove. A gap between the conveyor rolls and the press rolls matches substantially the thickness of a glass panel. Present as an immediate extension of the bending conveyor 4 is a tempering conveyor 5, which also consists of horizontal conveyor rolls and press rolls spaced from the conveyor rolls by a distance matching the thickness of a glass panel. The tempering conveyor 5 is covered over its entire length by upper and lower tempering air enclosures 7 and 8, tracing a curvilinear outline of the conveyor. The bending conveyor 4 may also have tempering air enclosures 7 and 8 along its downstream end section. Reference numeral 6 represents a vertical line, along which the bending conveyor 4 and the tempering conveyor 5 can be disengaged from each other. The tempering conveyor 5 is typically slightly longer than the bending conveyor 4. Both conveyors have their press rolls provided with a drive, i.e. rotated at a peripheral speed equal to that of the conveyor rolls, as a result of which the press rolls function also as conveyor rolls.

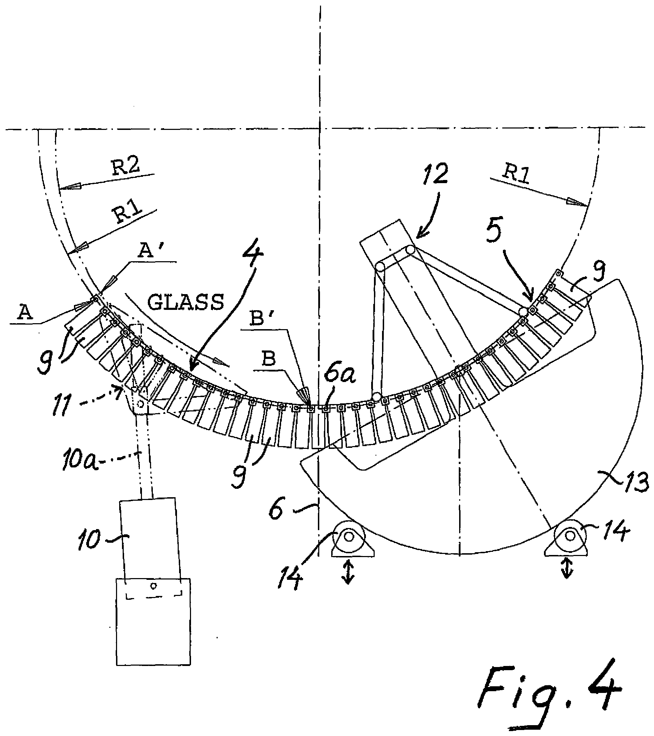

In reference to figs. 4, 5 and 7, there are only shown link bodies 9 along both sides of the conveyors 4, 5, which are fitted with bearings for the conveyor rolls and the press rolls. The link bodies 9 are in turn connected to each other with a link mechanism (not shown), which forces the link bodies to pivot relative to each other over the same extent as the conveyor is being arched. Such a link mechanism has been described e.g. in the Applicant's patent EP-1385795 (B1). Fig. 4 illustrates a power unit 10 and a lever system 11, by means of which the bending conveyor 4 is adjustable in terms of its radius of curvature. The power unit 10 can be a servomotor, which by way of a clutch operates a ball screw 10a, which in turn pushes and/or pivots the lever system 11 upon which rests a bridge established by the link bodies 9. A gap, present in the link mechanism (not shown) which controls the pivoting action of the link bodies 9, allows for the upstream end section of the conveyor 4 to have a radius of curvature which is slightly smaller than that of the downstream end section.

In addition to the above, it is preferred that the entire bending conveyor 4, or at least its upstream end section, be arched to a radius of curvature R2 which is slightly smaller than a radius of curvature R1 desired for the glass. This serves to eliminate end section flatness and the final tempered glass is brought over its entire extent to the desired curvature R1.

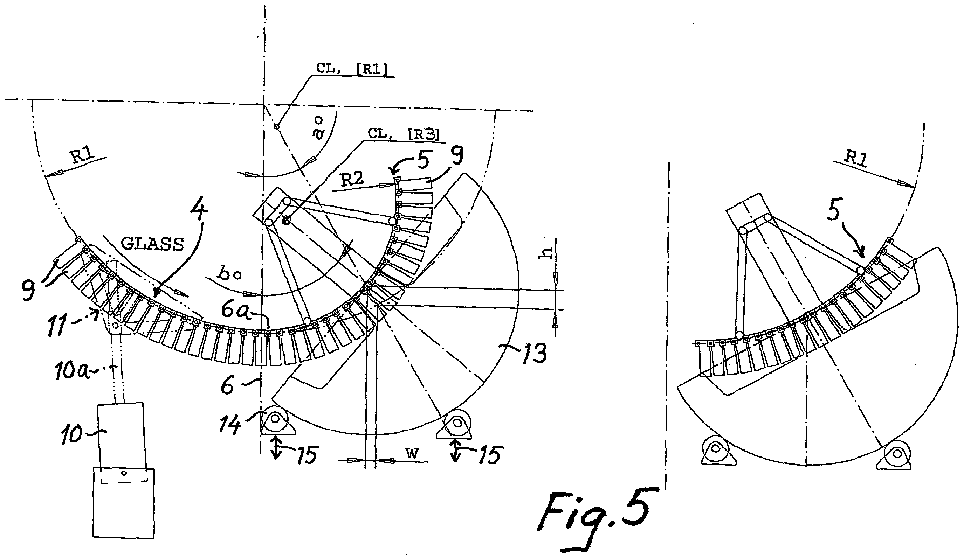

On the other hand, fig. 5 illustrates how the tempering conveyor 5 is maneuverable in vertical and horizontal directions (h and w) at the same time as the angle of its center axis CL changes. This way, the tempering conveyor 5 can have its curvature varied regardless of the bending conveyor 4, with an articulation point 6a between the conveyors 4, 5 remaining nevertheless stationary. As the desired radius of curvature R1 changes, a curvature adjustment for the tempering conveyor 5 is performed independently of the bending conveyor. During a curvature adjustment for the tempering conveyor 5 performed while the process is ongoing, the end of said conveyor may not become disengaged from the articulation point 6a common to the conveyors 4, 5. During a curvature adjustment, or immediately after the adjustment, the articulation point 6a for the conveyor 5 is set in position, e.g. by means of a photocell control. Thus, what is carried out during a curvature adjustment, or immediately thereafter, is an interpolating position-setting for the ends of these conveyors. In the conveying direction, the ends of the conveyors 4 and 5 are mechanically separate from each other in order to enable a curvature adjustment of the tempering conveyor 5 and to enable, whenever necessary, a disengagement of the tempering conveyor 5 from the bending conveyor 4. The downstream end of the bending conveyor 4 remains stationary at all times. Indicated by arrows 15 are power units for bringing rollers 14 up and down (vertical action h). In addition, the rollers 14 are able to travel (while maintaining the relative distance between themselves) in a horizontal direction at the same time as a swing frame 13 supporting the conveyor 5 is pivoted while supported upon the rollers 14. The swing frame 13 has its pivoting axis coinciding with the midpoint of an arch which extends through the articulated axles of the conveyor's 5 link bodies 9.

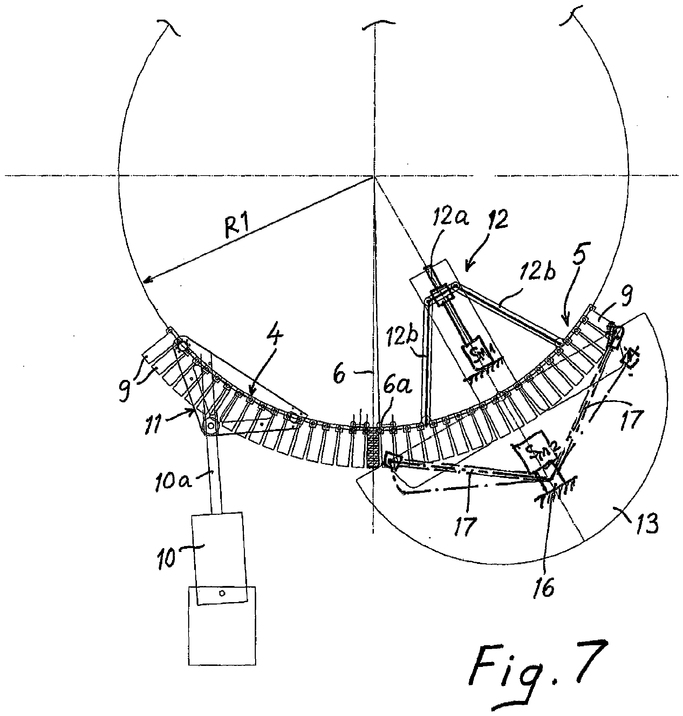

Fig. 7 illustrates an arching mechanism for the tempering conveyor 5, comprising a ball screw 12a, which is operated by a servomotor SM1 and which, through the intermediary of arms 12b, arches a bridge established by the link bodies 9, and at the same time the entire conveyor resting upon the link bodies 9. The arms 12b engage the conveyor 5 at a small distance from its ends. A second servomotor SM2 operates, by way of a herringbone gear 16, ball screws 17 which engage the conveyor 5 at its opposite outer ends. The servomotors SM1 and SM2 are matched (position synchronized) with each other, such that various sections of the conveyor 5 become arched to the same extent. For this purpose, the servomotors can be provided e.g. with a control-designed electrical gearbox. In fact, the arching could be carried out with just one actuator, but the use of two actuators makes it possible to avoid inaccuracies in the curvature of a conveyor caused by gaps resulting from the wearing of links. Specifically, the curvatures along the mid-section and end sections can be retained the same.

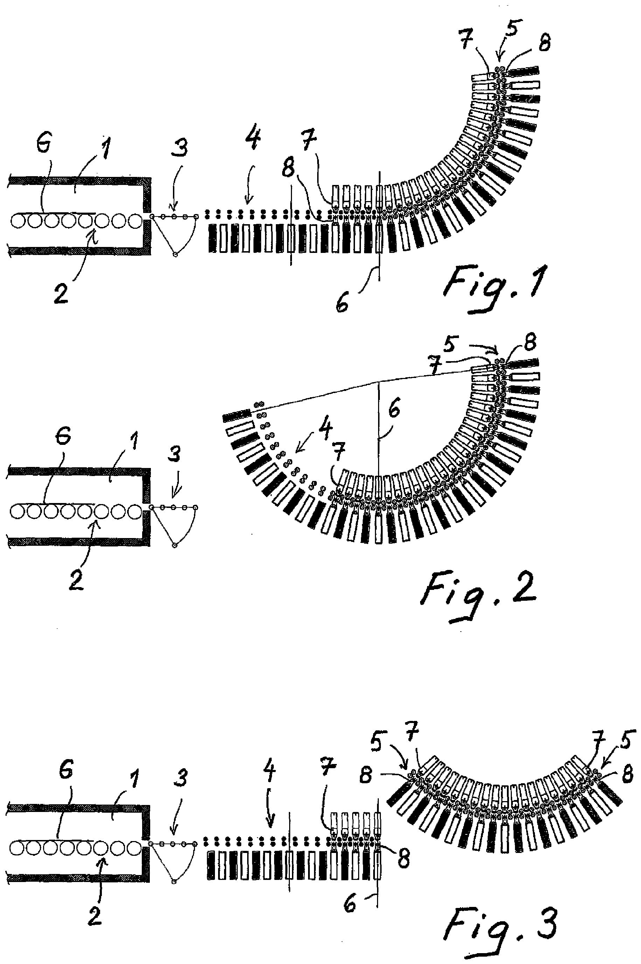

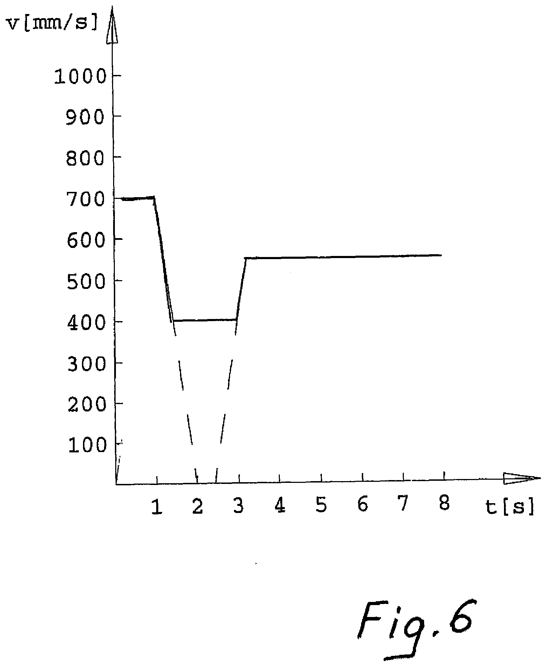

The method according to the invention is implemented with the above-described apparatus as follows. A glass panel G is heated in a furnace 1 to a temperature appropriate for bending and tempering. The flat glass panel G is delivered from the furnace 1 onto a bending conveyor 4 while the latter is in a straight configuration (fig. 1). A tempering conveyor 5 has been previously arched to a desired curve as early as or even prior to the flat glass panel is received by the straight bending conveyor 4. The glass panel's exit speed from the furnace is e.g. 700 mm/s (fig. 6) and the speed is decelerated over the period of e.g. 1 second to a speed of 400 mm/s at the same time as the glass panel passes onto the bending conveyor 4. The exit speed from the furnace can also be lower, e.g. 550 mm/s, and the deceleration proceeds to a speed of less than 300 mm/s. Arching of the bending conveyor 4 to a desired curve R1 is initiated even before the glass panel's trailing end section has completely reached the bending conveyor 4. Arching of the bending conveyor 4 is performed very quickly, typically within 1-2 seconds. That period is enough for the glass panel's leading edge to reach a position in line with tempering air enclosures 7, 8 present at the downstream end of the bending conveyor 4. Tempering blast may be continuously ongoing and the speed of a bent glass panel is increased to some degree, as can be seen from fig. 6. The increase of speed can be e.g. 10-40%. The deceleration of speed in the preceding stage is typically at least 30%, preferably more than 40%.

Over the course of a bending process, it is preferred that the conveyor 4, or at least its upstream end section, be arched beyond what is the desired final curvature R1 for a glass panel. This has been visualized in fig. 4, wherein the bending conveyor 4, or at least its upstream end section, has been arched with a bending radius R2 which is smaller than the desired final curvature R1 of a glass panel. This over-arching serves to diminish or eliminate the end-section flatness of a glass panel, such that the glass panel acquires, all the way to its ends, the desired curvature R1 as precisely as possible. R2 is several percent, even up to 5-10%, smaller than R1. If desired, the upstream end section of the conveyor 4 can be adapted to be arched separately. However, the gaps in link mechanisms are generally enough to provide a sufficient over-arching for the conveyor's 4 upstream end section. In addition to this, the entire bending conveyor 4 can be arched, proceeding from its stationary downstream end, slightly beyond the desired final curvature of a glass panel.

Fig. 5 illustrates, in an overstated manner for clearer visualization, the way how the tempering conveyor 5 can also be arched during the process to a radius of curvature R3 slightly smaller or larger than the desired radius of curvature R1. This arching of the tempering conveyor 5 to the smaller or larger radius R3 is first of all enabled by virtue of the previously mentioned freedoms of movement (h, w and an angle α), as well as by virtue of the mentioned interpolating position-setting, while the articulation point 6a between the conveyors 4, 5 remains stationary. Arching of the tempering conveyor 5 during the process is sufficiently slight not to cause a change in the glass panel's radius of curvature R1, but nevertheless clamps the glass panel between conveyor rolls and press rolls to such a tightness that the glass panel is able to proceed upward even along a steep arch without slipping. Thus, tempered glass panels can be discharged even vertically straight upward to an appropriate manipulator, which receives the glass panel. However, if necessary, the tempering conveyor 5 can also be disengaged from the bending conveyor 4, enabling the tempering conveyor 5 to be pivoted as a whole for diminishing the vertical drop between its discharge end and midpoint (see e.g. fig. 3). Consequently, the glass panel can be discharged from the tempering conveyor 5 at quite a low angle with respect to the horizontal plane, without having to move the glass panel in vertical direction.

Whenever the apparatus is used to produce bent and tempered glass panels in succession with the same desired radius of curvature R1, the curvature of the tempering conveyor 5 is retained the same at all times, except for a very slight increase of curvature during the process. Other than that, the only time that the curvature of the tempering conveyor 5 needs changing is when the desired curvature R1 changes.

The method and apparatus according to the invention are also particularly apt for the production of bidirectionally curved glass panels. In this case, the rolls are also subjected to deflection, as described e.g. in the Applicant's patent publication EP-1597208 (B1).

## Claims

1. A method for bending and tempering a glass panel, said method comprising the steps of
- heating a glass panel in a heating furnace (1) for bending and tempering
- feeding a flat glass panel (G) from the furnace (1) onto a bending conveyor (4) with the bending conveyor (4) in a straight configuration
- arching the bending conveyor (4) and a glass panel to a desired curvature while the glass panel travels along the bending conveyor (4),
- passing a bent glass panel is passed from the bending conveyor (4) onto a tempering conveyor (5) present as its extension, which has been previously arched to a desired curve as early as or even prior to a flat glass panel is received onto the straight bending conveyor (4), **characterized in that** the bending conveyor is arched by lifting the upstream end of the bending conveyor relative to its downstream end until the desired curvature of the bending conveyor is reached and that in the process of arching the bending conveyor (4) and the tempering conveyor (5), an articulation point (6a) between the conveyors (4, 5) remains stationary.

2. A method as set forth in claim 1, **characterized in that**, during the course of a bending process, the bending conveyor (4) or at least its upstream end section is arched beyond a desired final curvature of the glass panel, i.e. the bending conveyor (4) or at least its upstream end section is arched with a bending radius (R2), which is smaller than a bending radius (R1) for the desired final curvature of the glass panel.

3. A method as set forth in claim 1 or 2, **characterized in that** the tempering conveyor (5) is arched during the course of a tempering process to a bending radius slightly smaller than the desired bending radius (R1) of a glass panel, yet in such a way that the glass panel does not change its curvature on the tempering conveyor but, instead, the glass panel only becomes tightly clamped between the upper and lower tempering conveyor rolls.

4. A method as set forth in any of claims 1-3, **characterized in that** the tempering conveyor (5) is disengaged from the bending conveyor (4) and the tempering conveyor (5) is pivoted as a whole in such a way that the vertical drop between its discharge end and its midpoint decreases without changing the tempering conveyor in terms of its curvature.

5. A method as set forth in any of claims 1-4, **characterized in that**, during the passage of a glass panel onto the bending conveyor (4), the glass panel has its speed decelerated by at least 30% of the speed at which the glass panel emerges from the furnace (1), and the glass panel has its speed accelerated again as the glass panel is passed from the bending conveyor onto the tempering conveyor.

6. An apparatus for bending and tempering a glass panel, said apparatus comprising
- a heating furnace (1) for heating glass panels to a bending temperature
- a bending conveyor (4) for bending glass panels, the bending conveyor (4) comprising horizontal conveyor rolls
- means (9, 10) for arching the bending conveyor to a curve matching the desired curvature of a glass panel and means (5, 7, 8) for cooling the bent glass panel for tempering, and
- a tempering conveyor (5) and means (9, 12) for arching the tempering conveyor, which is already in a configuration arched to a desired curve even as the bending conveyor (4) is still in a straight configuration,
**characterized in that** the means (9, 12) for arching the bending conveyor are arranged to lift the upstream end of the bending conveyor relative to its stationary downstream end for obtaining the desired curvature of the bending conveyor (4) and **in that** the tempering conveyor (5) is maneuverable in vertical and horizontal directions at the same time as the angle of its center axis is variable, while an articulation point (6a) between the conveyors (4, 5) remains stationary during said maneuvering.

7. An apparatus as set forth in claim 6, **characterized in that** the bending conveyor (4) or at least its upstream end section is adapted to be arched to a radius of curvature smaller than a desired radius of curvature (R1) of the glass panel present on the bending conveyor (4).

8. An apparatus as set forth in claim 6, **characterized in that** the tempering conveyor (5) is capable of being disengaged from the bending conveyor (4) and the tempering conveyor (5) is capable of being pivoted as a whole in such a way that the vertical drop between its discharge end and its midpoint decreases without changing the tempering conveyor in terms of its curvature.

## Patentansprüche

1. Verfahren zum Biegen und Anlassen einer Glasplatte, wobei das Verfahren ferner die folgenden Schritte umfasst:
- Erwärmen einer Glasplatte in einem Heizofen (1) zum Biegen und Anlassen
- Zuführen einer ebenen Glasplatte (G) vom Ofen (1) auf eine Biege-Transportvorrichtung (4), wobei die Biege-Transportvorrichtung (4) in einer geraden Konfiguration ist
- Krümmen der Biege-Transportvorrichtung (4) und einer Glasplatte in eine gewünschte Krümmung, während die Glasplatte entlang der Biege-Transportvorrichtung (4) wandert,
- Weiterleiten einer gebogenen Glasplatte von der Biege-Transportvorrichtung (4) auf eine Anlass-Transportvorrichtung (5), die als ihre Verlängerung vorhanden ist, die vorher auf eine gewünschte Krümmung zur selben Zeit oder sogar, bevor eine ebene Glasplatte auf der geraden Biege-Transportvorrichtung (4) gebogen wurde, gebogen wurde, **dadurch gekennzeichnet, dass** die Biege-Transportvorrichtung dadurch gekrümmt wird, dass das stromaufwärtige Ende der Biege-Transportvorrichtung gegenüber ihrem stromabwärtigen Ende gewölbt wird, bis die gewünschte Krümmung der Biege-Transportvorrichtung erreicht ist, und dass bei dem Prozess des Wölbens der Biege-Transportvorrichtung (4) und der Anlass-Transportvorrichtung (5) ein Anlenkpunkt (6a) zwischen den Transporteinrichtungen (4, 5) stationär bleibt.

2. Verfahren nach Anspruch 1, **dadurch gekennzeichnet, dass** im Verlauf eines Biegeprozesses die Biege-Transportvorrichtung (4) oder zumindest ihr stromaufwärts gelegener Endabschnitt über eine gewünschte Endkrümmung der Glasplatte hinaus gebogen wird, d. h. die Biege-Transportvorrichtung (4) oder zumindest ihr stromaufwärts gelegener Endabschnitt wird mit einem Biegeradius (R2) gekrümmt, der kleiner als ein Biegeradius (R1) für die gewünschte Endkrümmung der Glasplatte ist.

3. Verfahren nach Anspruch 1 oder 2, **dadurch gekennzeichnet, dass** die Anlass-Transportanlage (5) im Verlauf eines Anlassprozesses bis zu einem Biegeradius gekrümmt wird, der etwas kleiner als der gewünschte Biegeradius (R1) einer Glasplatte ist, jedoch in einer solchen Weise, dass die Glasplatte ihre Krümmung auf der Anlass-Transportvorrichtung nicht ändert, sondern stattdessen wird die Glasplatte nur zwischen den oberen und unteren Anlass-Transportrollen festgeklemmt.

4. Verfahren nach einem der Ansprüche 1 - 3, **dadurch gekennzeichnet, dass** die Anlass-Transportvorrichtung (5) von der Biege-Transportvorrichtung (4) gelöst wird, und die Anlass-Transportvorrichtung (5) wird als Ganzes derart geschwenkt, dass die vertikale Fallhöhe zwischen ihrem Austrittsende und ihrem Mittelpunkt sich verringert, ohne dass die Anlass-Transportvorrichtung sich in Bezug auf ihre Krümmung ändert.

5. Verfahren nach einem der Ansprüche 1 - 4, **dadurch gekennzeichnet, dass** während des Laufs einer Glasscheibe auf die Biege-Transportvorrichtung (4) die Geschwindigkeit der Glasplatte um mindestens 30 % der Geschwindigkeit verringert wird, mit der die Glasplatte aus dem Ofen (1) herauskommt, und die Geschwindigkeit der Glasplatte wird wieder beschleunigt, wenn die Glasplatte von der Biege-Transportvorrichtung auf die Anlass-Transportvorrichtung läuft.

6. Vorrichtung zum Biegen und Anlassen einer Glasplatte, wobei die Vorrichtung umfasst
- einen Heizofen (1) zum Erwärmen von Glasplatten auf eine Biegetemperatur
- eine Biege-Transportvorrichtung (4) zum Biegen von Glasplatten, wobei die Biege-Transportvorrichtung (4) horizontale Transportrollen umfasst
- Mittel (9, 10) zum Krümmen der Biege-Transportvorrichtung (4) zu einer Kurve, die der gewünschten Krümmung einer Glasplatte entspricht, und Mittel (5, 7, 8) zum Kühlen der gebogenen Glasplatte zum Anlassen, und
- eine Anlass-Transportvorrichtung (5) und Mittel (9, 12) zum Krümmen der Anlass-Transportvorrichtung, die bereits in einer Konfiguration ist, welche zu einer gewünschten Kurve gekrümmt ist, selbst wenn die Biege-Transportvorrichtung (4) immer noch in einer geraden Konfiguration ist,
**dadurch gekennzeichnet, dass** die Mittel (9, 12) zum Krümmen der Biege-Transportvorrichtung zum Anheben des Aufwärtsendes der Biege-Transportvorrichtung gegenüber ihrem stationären Abwärtsende angeordnet sind, um die gewünschte Krümmung der Biege-Transportvorrichtung (4) zu erhalten, und dadurch, dass die Anlass-Transportvorrichtung (5) gleichzeitig in vertikaler und horizontaler Richtung manövrierfähig ist, da der Winkel ihrer Mittelachse variabel ist, während ein Anlenkpunkt (6a) zwischen den Transportvorrichtungen (4, 5) während des Manövrierens stationär bleibt.

7. Vorrichtung nach Anspruch 6, **dadurch gekennzeichnet, dass** die Biege-Transportvorrichtung (4) oder zumindest ihr Aufwärtsendabschnitt dafür ausgelegt ist, auf einen Krümmungsradius gebogen zu werden, der kleiner als ein gewünschter Krümmungsradius (R1) der Glasplatte ist, die auf der Biege-Transportvorrichtung (4) vorhanden ist.

8. Vorrichtung nach Anspruch 6, **dadurch gekennzeichnet, dass** die Anlass-Transportvorrichtung (5) von der Biege-Transportvorrichtung (4) gelöst werden kann und dass die Anlass-Transportvorrichtung (5) als Ganzes derart geschwenkt werden kann, dass die vertikale Fallhöhe zwischen ihrem Austrittsende und ihrem Mittelpunkt sich verringert, ohne dass die Anlass-Transportvorrichtung sich in Bezug auf ihre Krümmung ändert.

## Revendications

1. Procédé de cintrage et de trempe d'un panneau en verre, ledit procédé comprenant les étapes suivantes :
- chauffage d'un panneau en verre dans un four de chauffage (1) pour le cintrage et la trempe,
- apport d'un panneau en verre plat (G) depuis le four (1) jusque sur un convoyeur de centrage (4), le convoyeur de centrage (4) ayant une conformation rectiligne,
- cintrage du convoyeur de centrage (4) et d'un panneau en verre à une courbure souhaitée pendant que le panneau en verre se déplace le long du convoyeur de centrage (4),
- transfert d'un panneau en verre cintré du convoyeur de cintrage (4) sur un convoyeur de trempe (5) présent au niveau de son extension et qui a été précédemment arqué en du une courbe souhaitée dès ou même avant qu'un panneau en verre plat soit reçu sur le convoyeur de cintrage rectiligne (4), caractérisé ce que le convoyeur de cintrage est arqué en soulevant l'extrémité amont du convoyeur de cintrage par rapport à son extrémité aval jusqu'à ce que la courbe désirée du convoyeur de cintrage soit atteinte et en ce que, dans le processus de cintrage du convoyeur de cintrage (4) et du convoyeur de trempe (5), un point d'articulation (6a) entre les convoyeurs (4, 5) reste stationnaire.

2. Procédé selon la revendication 1, **caractérisé en ce que**, au cours d'un processus de cintrage, le convoyeur de cintrage (4) ou au moins sa section terminale amont est arqué au-delà d'une courbure finale souhaitée du panneau en verre, c'est-à-dire que le convoyeur de cintrage (4) ou au moins sa section terminale amont est arqué avec un rayon de cintrage (R2) qui est inférieur à un rayon de cintrage (R1) pour la courbure finale souhaitée du panneau en verre.

3. Procédé selon la revendication 1 ou 2, **caractérisé en ce que** le convoyeur de trempe (5) est arqué au cours d'un processus de trempe jusqu'à un rayon de cintrage légèrement inférieur au rayon de cintrage souhaité (R1) d'un panneau en verre mais de manière à ce que le panneau en verre ne change pas de courbure sur le convoyeur de trempe mais que, au lieu de cela, le panneau en verre finisse par être serré étroitement entre les rouleaux supérieurs et inférieurs du convoyeur de trempe.

4. Procédé selon l'une quelconque des revendications 1 à 3, **caractérisé en ce que** le convoyeur de trempe (5) est désengagé du convoyeur de cintrage (4) et que le convoyeur de trempe (5) est pivoté dans sa totalité de manière à ce que la dénivellation verticale entre son extrémité de décharge et son point central diminue sans que le convoyeur de trempe subisse de changement au niveau de sa courbure.

5. Procédé selon l'une quelconque des revendications 1 à 4, **caractérisé en ce que**, pendant le transfert d'un panneau en verre sur le convoyeur de cintrage (4), la vitesse du panneau en verre est décélérée à raison d'au moins 30 % de la vitesse à laquelle le panneau en verre sort du four (1) et que la vitesse du panneau en verre est accélérée à nouveau lorsque le panneau en verre est transféré du convoyeur de cintrage sur le convoyeur de trempe.

6. Appareil de cintrage et de trempe d'un panneau en verre, ledit appareil comprenant
- un four de chauffage (1) pour chauffer des panneaux en verre à une température de cintrage,
- un convoyeur de centrage (4) pour cintrer des panneaux en verre, le convoyeur de centrage (4) comprenant des rouleaux convoyeurs horizontaux,
- un moyen (9,10) pour arquer le convoyeur de cintrage (4) à une courbe correspondant à la courbure souhaitée d'un panneau en verre et un moyen (5, 7, 8) pour refroidir le panneau en verre pour la trempe, et
- un convoyeur de trempe (5) et un moyen (9, 12) de cintrage du convoyeur de trempe qui a déjà une conformation arquée jusqu'à une courbure souhaitée même si le convoyeur de cintrage (4) est déjà dans une configuration rectiligne,
caractérisé ce que le moyen (9, 12) de cintrage du convoyeur de trempe est conçu pour soulever l'extrémité amont du convoyeur de cintrage par rapport à son extrémité aval stationnaire pour obtenir la courbe désirée du convoyeur de cintrage (4) et en ce que le convoyeur de trempe (5) est manoeuvrable dans les sens vertical et horizontal en même temps que l'angle de son axe central est variable, alors qu'un point d'articulation (6a) entre les convoyeurs (4, 5) reste stationnaire pendant ladite manoeuvre.

7. Appareil selon la revendication 6, **caractérisé en ce que** le convoyeur de cintrage (4) ou au moins sa section terminale amont est apte à être arqué à un rayon de courbure inférieur à un rayon souhaité de courbure (R1) du panneau en verre présent sur le convoyeur de cintrage (4).

8. Appareil selon la revendication 6, **caractérisé en ce que** le convoyeur de trempe (5) est apte à être désengagé du convoyeur de cintrage (4) et que le convoyeur de trempe (5) est apte à être pivoté dans sa totalité de manière à ce que la dénivellation verticale entre son extrémité de décharge et son point central diminue sans que le convoyeur de trempe change de courbure.
